# FASCICULE DE BREVET EUROPEEN

(11) **EP 1 382 863 B1**
(45) Date de publication et mention de la délivrance du brevet: **05.04.2006**
(21) Numéro de dépôt: 03291742.9
(22) Date de dépôt: 15.07.2003
(51) Int. Cl.: F16B 23/00

(54) **Vis a tête specialement adaptée à un embout de préhension et de vissage**
Schraube mit einem insbesondere einem Einsatz zum Aufnehmen und Anziehen derselben geeigneten Kopfes
Screw with a head specially adapted to a tool bit for holding and screwing it

(30) Priorité: 19.07.2002 FR 0209297
(43) Date de publication de la demande: 21.01.2004
(73) Titulaire: L.R. ETANCO, F-78400 Chatou Cedex (FR)
(72) Inventeur: Breant, Daniel, 78580 Maule (FR)
(74) Mandataire: de Saint-Palais, Arnaud Marie

(56) Documents cités:
- DE-A- 19 510 547
- FR-A- 2 720 129
- US-A- 2 676 506
- US-A- 3 002 414
- US-A- 5 518 351
- US-A- 5 960 682

## Description

La présente invention concerne un dispositif de vissage faisant intervenir une vis dont la tête est spécialement adaptée à un embout de préhension et de vissage d'un appareil de vissage tel que par exemple une visseuse/dévisseuse motorisée.

D'une façon générale, on sait que les têtes de vis sont conformées en fonction des outils qui servent à assurer leur vissage ou leur dévissage et éventuellement de la nature du matériau dans lequel la vis vient se visser.

Ainsi le brevet US 3 002 414 décrit une vis comprenant une noix d'entraînement comprenant deux portions cylindriques de même diamètre séparées l'une de l'autre par un pignon coaxial.

Cette vis est entraînée en rotation par un dispositif comprenant un pignon d'entraînement qui engraine avec le pignon de la vis et deux doubles galets de contre-appui qui viennent porter sur les deux portions cylindriques.

Dans le cas où le vissage/dévissage est effectué au moyen d'une visseuse équipée d'un embout de vissage la tête de la vis doit nécessairement comprendre trois types de formes :
- des formes de guidage coopérant avec des formes correspondantes de l'embout pour assurer un centrage de la vis coaxialement à l'axe de rotation de l'embout,
- des formes aptes à coopérer avec des moyens de retenue de l'embout pour maintenir la tête de la vis engagée dans l'embout avec possibilité d'extraction, préalablement et pendant l'opération de vissage,
- des moyens de couplage qui coopèrent avec des moyens correspondants de l'embout pour permettre à ce dernier d'entraîner la vis en rotation.

Habituellement, le processus de centrage est obtenu en utilisant des têtes de vis dont la surface cylindrique, prismatique, voire même conique est sensiblement complémentaire à au moins une portion de la surface intérieure de l'embout dans laquelle elle vient axialement s'engager.

Les moyens de retenue de la tête de vis à l'intérieur de l'embout peuvent être réalisés de diverses façons à savoir, pince élastique, joints toriques élastiquement déformables, aimants permanents, mâchoires de préhension etc.

Les moyens de couplage servant à l'entraînement en rotation de la vis font intervenir au niveau de la tête des formes concaves (par exemple des empreintes cruciformes), des formes convexes (par exemple des dentures) ou des méplats (pans), ces formes étant destinées à venir en prise avec des formes correspondantes de l'embout de vissage pour transmettre un couple de vissage.

Ainsi le brevet US 2 676 506 propose un embout de vissage comprenant une douille tubulaire dans laquelle peut s'engager une tête de vis classique. Des languettes flexibles fixées sur cet embout permettent d'assurer un verrouillage de la tête de vis à l'intérieur de la douille grâce à un manchon tubulaire monté coulissant sur la douille.

Dans le but d'améliorer la fonction de préhension de la tête de la vis par l'embout de vissage, le brevet US 6 240 811 propose une vis présentant une tête à bord circulaire et, en retrait par rapport audits bords, une portion sous-tête polygonale inscrite dans un cercle de diamètre inférieur à celui de la tête mais supérieur à celui de la tige filetée de la vis.

Le vissage/dévissage de cette vis est obtenu au moyen d'un embout comprenant deux mâchoires de préhension et d'entraînement, mobiles axialement à l'intérieur d'une douille et pouvant basculer l'une par rapport à l'autre en se refermant l'une contre l'autre lors de leur déplacement vers l'intérieur de la douille grâce à l'action d'une forme conique de la douille sur une forme correspondante des mâchoires.

Les extrémités extérieures des mâchoires présentent des conformations sensiblement complémentaires de celles de la tête de la vis et de la portion sous-tête.

Grâce à ces dispositions, en position ouverte des mâchoires, il est possible d'engager la tête d'une vis entre les susdites conformations.

En provoquant ensuite un déplacement de l'ensemble vis/mâchoires vers l'intérieur de l'embout on provoque la fermeture des mâchoires.

La tête de la vis se trouve alors emprisonnée dans les mâchoires dont les extrémités viennent en prise sur la portion sous-tête polygonale.

Les fonctions de préhension de centrage et de couplage sont ici exclusivement assurées par les mâchoires.

Il s'avère que cette solution présente un certain nombre d'inconvénients.

Du fait qu'elles servent à assurer la transmission du couple d'entraînement en rotation de la vis, les mâchoires doivent présenter des dimensions relativement importantes' et être réalisées en un matériau très résistant. En outre, le mécanisme associé aux mâchoires doit être conçu et dimensionné de manière à assurer une prise efficace des mâchoires sur la portion sous-tête de la vis (sur laquelle s'exerce le couple d'entraînement). En conséquence, l'embout de vissage est nécessairement long et volumineux, ce qui le rend inutilisable dans un certain nombre d'applications.

Par ailleurs, en position fermée la partie des mâchoires venant en prise sur la portion sous-tête de la vis vient en saillie, à l'extérieur de la douille. De ce fait, lors du vissage les mâchoires risquent donc de venir au contact des pièces que l'on est en train de fixer et de les endommager.

Cet inconvénient résulte également de la forme angulaire (voire dentelée) de la portion sous-tête de la vis qui vient au contact de la pièce à visser. Il se manifeste tout particulièrement lorsque la vis s'engage obliquement dans la pièce à visser.

L'invention a donc plus particulièrement pour but de supprimer ces inconvénients.

Elle propose, à cet effet, une vis dont la tête est spécialement conçue pour permettre un vissage/dévissage de la vis à l'aide de moyens de vissage comprenant d'une part une douille tubulaire apte à être entraînée en rotation et présentant à l'une de ses extrémités une cavité coaxiale s'ouvrant à l'extérieur de manière à pouvoir recevoir la tête de la vis, la surface intérieure de la douille qui délimite cette cavité présentant au moins une conformation d'entraînement de la tête de la vis et d'autre part des moyens de préhension de la vis mobiles à l'intérieur de ladite cavité.

La tête de vis est conformée de manière à pouvoir s'engager dans ladite cavité. Le bord périphérique de la tête de vis est muni d'échancrures destinées à coopérer avec les conformations dudit embout pour exercer sur la vis un couple de vissage et la vis comprend une portion sous-tête cylindrique dont le diamètre est inférieur à celui de la tête mais supérieur à celui de la tige filetée de la vis, le raccord entre cette portion cylindrique avec la périphérie de la tête et avec l'extrémité de la tige s'effectuant grâce à des épaulements radiaux dont les plans délimitent un espace dans lequel peuvent s'engager les moyens de préhension de l'embout lorsque ladite tête est engagée dans ladite cavité, le rayon de la portion cylindrique étant égal à la distance entre le fond des échancrures et l'axe de la vis de manière à obtenir un centrage de la vis par l'action conjuguée de la douille et des moyens de préhension.

Grâce à ces dispositions, la fonction d'entraînement en rotation est assurée séparément de la fonction de préhension.

La fonction d'entraînement est directement assurée par la douille de l'embout qui peut être conformée à la façon d'une clé à tube classique et présentée en conséquence une épaisseur minimale, compte tenu du couple qu'elle doit exercer sur la vis.

Les moyens de préhension n'ayant plus de fonction d'entraînement en rotation peuvent en conséquence présenter des dimensions réduites sans pour autant perdre de l'efficacité.

Les moyens de centrage sont assurés à la fois par la douille et par les moyens de préhension : cette disposition permet d'utiliser des vis à têtes relativement plates qui risqueraient de rotuler légèrement dans un embout de vissage classique. Dans ce cas, l'action des moyens de préhension sur la partie cylindrique sous-tête vient confirmer ce centrage en fin d'introduction de la vis dans la douille.

Un mode d'exécution de l'invention sera décrit ci-après, à titre d'exemple non limitatif, avec référence aux dessins annexés dans lesquels :
Les figures 1 à 3 sont des vues respectivement en coupe axiale, en vue de côté et en vue de dessus d'une tête de vis selon l'invention.
Les figures 4 et 5 sont des vues en perspective de la vis illustrée sur les figures 1 à 3.
Les figures 6 et 7 sont les coupes axiales d'un embout de vissage, en position de vissage (fig. 6) et en position d'insertion/extraction d'une vis (fig. 7).
Les figures 8 et 9 sont des vues de l'extrémité de la visseuse dans laquelle s'engagent les vis, ces vues correspondant respectivement aux positions illustrées sur les figures 6 et 7.

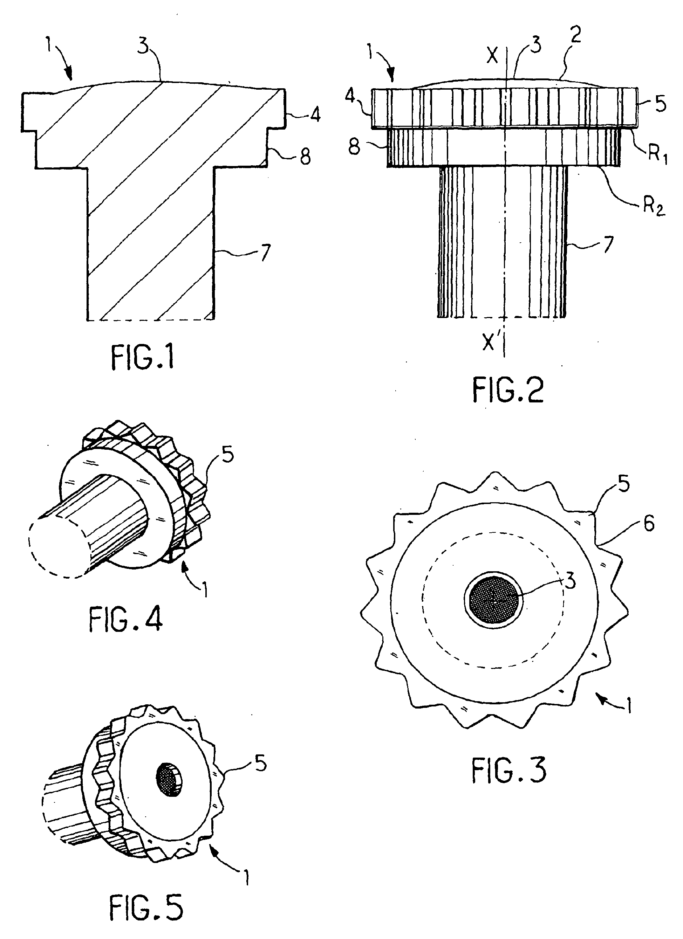

Dans l'exemple représenté sur les figures 1 à 5 seule la tête de la vis a été représentée avec seulement le départ de la tige, étant entendu que l'invention ne se limite pas à un type de vis particulier. Ainsi, cette vis pourrait présenter un filet de type classique ou un filet autotaraudeur terminé par une pointe autoperforante.

Cette tête de vis 1 présente une face supérieure bombée 2 avec au centre une cuvette d'injection 3. Le bord périphérique 4 de la tête 1 est dentelé et comprend ici quinze dents 5 séparées par des échancrures 6 formant un angle d'environ 117°.

Cette tête 1 est reliée à une tige coaxiale 7 par l'intermédiaire d'une portion cylindrique sous-tête 8 dont le rayon est sensiblement égal à la distance entre le fond des échancrures et l'axe X, X' de la vis. Dans cet exemple, la hauteur de la portion cylindrique 8 est sensiblement égale à la hauteur de la tête 1. Le diamètre de la tige 7 de la vis, au niveau de son raccordement à la portion cylindrique 8, est très inférieur à celui de la tête 1(environ 50%). Le raccord entre la portion cylindrique 8 avec la périphérie 4 de la tête 1 et avec l'extrémité de la tige 7, s'effectuant grâce à des épaulements radiaux R₁, R₂.

Bien entendu, cette vis pourra être vissée à l'aide d'un outil à main présentant un embout tubulaire dont le profil intérieur correspond à la forme extérieure dentelée de la tête 1.

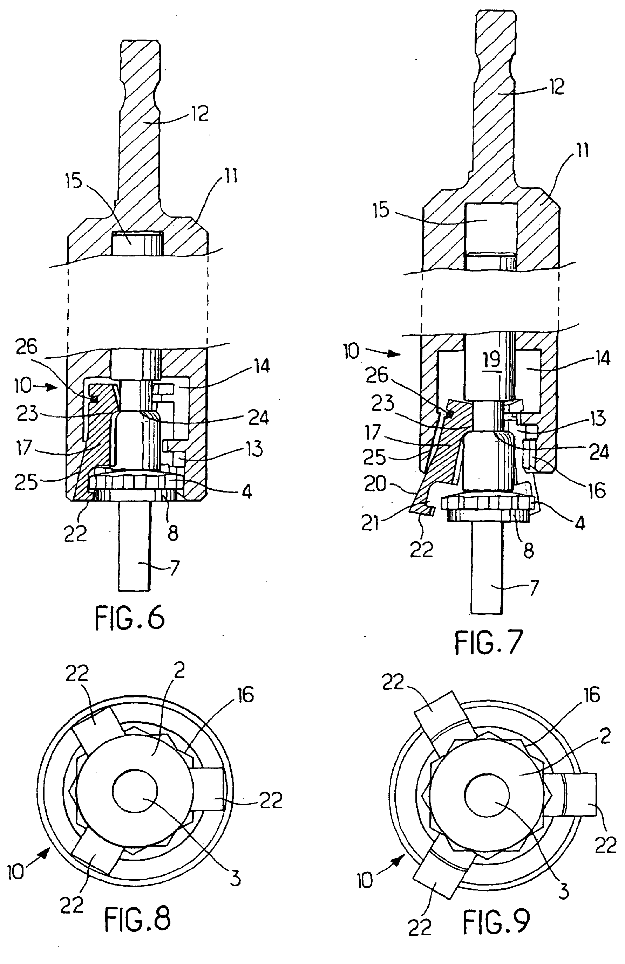

Néanmoins, elle convient tout particulièrement à l'embout de vissage illustré sur les figures 6 à 9 qui comprend essentiellement une douille tubulaire 10 refermée d'un coté par un fond 11 prolongé coaxialement par une tige 12 de section hexagonale destinée à s'engager dans le mandrin d'une visseuse.

Cette douille 10 présente du coté opposé à la tige une cavité coaxiale comprenant trois chambres successives 13, 14, 15, à savoir :
- Une chambre 13 destinée notamment à recevoir la tête 1 de la vis, cette chambre 13 présentant une section à profil dentelé (denture 16) sensiblement complémentaire de celui de la tête 1 de la vis.
- Une deuxième chambre 14 dans laquelle s'engagent des mâchoires de préhension 17 lorsque la tête 1 de la vis est engagée dans la première chambre 13 et
- Une troisième chambre 15 dans laquelle coulisse un noyau 19 d'actionnement des mâchoires 17, cette chambre 15 étant équipée d'un dispositif (non représenté) permettant au noyau 19 de se déplacer axialement dans les chambres 13, 14, 15 entre deux positions stables correspondant respectivement aux positions "ouverte et fermée" des mâchoires 17, en passant par un état instable dans l'intervalle des deux positions stables.

Les mâchoires 17 sont constituées par des languettes d'acier comprenant chacune, à l'une de ses extrémités (coté extérieur de la douille) un bord oblique 20 et du coté opposé à ce bord une échancrure latérale 21 délimitée par un profil en forme de C dont les deux branches parallèles sont écartées l'une de l'autre d'une distance légèrement supérieure à l'épaisseur de la tête 1 de la vis.

Cette échancrure 21 délimite avec le bord extrême 22 de la languette une protubérance de largeur au plus égale à la hauteur de la portion cylindrique sous-tête 8 de la vis.

Par ailleurs, chaque languette comprend dans sa partie opposée à l'échancrure 21, du même coté que celle-ci une protubérance 23 destinée à venir en prise sur un épaulement 24 du noyau.

Chaque languette s'engage partiellement et peut axialement coulisser dans une gorge de guidage 25 formée dans la surface intérieure de la douille 10, au niveau de la première chambre 13, de manière à pouvoir prendre deux positions axialement décalées à savoir :
- Une position rentrée dans laquelle les bords extrêmes 22 arasent l'extrémité antérieure de la douille 10, les échancrures 21 se trouvant en conséquence à l'intérieur de la douille 10 de manière à retenir la tête 1 de la vis, et
- Une position déployée dans laquelle les extrémités des languettes ressortent de la douille 10 et sont orientées radialement vers l'extérieur de manière à ce que les échancrures 21 soient suffisamment espacées les unes des autres pour pouvoir recevoir la tête 1 de la vis.

Pour pouvoir obtenir un tel espacement, le fond des gorges 25 de guidage s'étend obliquement par rapport à l'axe de la douille 10 et va en s'évasant vers l'extrémité de cette dernière.

Par ailleurs, les extrémités antérieures des languettes comprennent à l'opposé des protubérances 23, des encoches par lesquelles passe un jonc coaxial élastique 26 dont l'action tend à maintenir leurs parties obliques 20 contre les fonds obliques des gorges 25.

Grâce à ces dispositions, en position déployée (illustrée fig. 3) on engage la tête de la vis entre les mâchoires, au niveau des cavités 21, le sommet de la tête 1 venant en butée sur le noyau 19.

On exerce ensuite sur la vis une pression axiale qui provoque un déplacement axial de l'ensemble noyau 19/mâchoires 17 vers l'intérieur de la douille 10.

Au cours de ce déplacement, les mâchoires 17 se referment en raison de l'action des fonds obliques sur les bords obliques 20 des languettes.

Ce déplacement se poursuit jusqu'à ce que les mâchoires 17 se trouvent en position rétractée (deuxième position stable). Dans cette position, la tête 1 de la vis se trouve emprisonnée dans la douille 10, position dans laquelle,
- Le profil dentelé de la douille 10 est en prise avec celui de la tête 1 de la vis de manière à pourvoir lui transmettre un couple de vissage,
- Les protubérances 22 des languettes ne ressortent pas de la douille 10 et ne peuvent donc pas endommager la pièce à visser. Il en est de même pour les dentelures 16 de la douille 10 qui se terminent grâce à un chanfrein légèrement en amont de l'orifice de la douille 10,
- Le centrage de la vis est assuré à la fois par l'engrènement des profils dentelés 16, 5 de la douille 10 et de la tête 1 de la vis et par l'action des protubérances 22 contre la portion cylindrique sous-tête 8 de la vis,
- Les mâchoires 17 ne participent pas à l'entraînement en rotation et ne subissent donc pas de contraintes importantes : leur mécanisme peut donc être allégé et mieux adapté à leurs fonctions de préhension et de centrage,
- L'entraînement en rotation de la vis est directement assuré par la douille 10. De ce fait, on utilise de façon optimale la forme tubulaire de cette douille pour assurer la transmission du couple de vissage.

Le désengagement de la vis, hors de la douille, s'effectue en exerçant un effort de traction entre vis et douille 10. Sous l'effet de cette traction l'ensemble mâchoires 17/noyau 19 se trouve attiré vers l'extérieur de la douille 10 et subit un déplacement vers la position déployée.

Au cours de ce déplacement les languettes sont maintenues sur le fond oblique des gorges 25 et se déploient en s'écartant les unes des autres.

En fin de course (position déployée), les extrémités des languettes se trouvent suffisamment écartées les unes des autres pour que la tête 1 de la vis puisse être extraite.

## Revendications

1. Vis dont la tête est spécialement conçue pour permettre un vissage/dévissage de la vis à l'aide de moyens de vissage comprenant d'une part une douille tubulaire (10) apte à être entraînée en rotation et présentant à l'une de ses extrémités une cavité coaxiale s'ouvrant à l'extérieur de manière à pouvoir recevoir la tête (1) de la vis, la surface intérieure de la douille (10) qui délimite cette cavité présentant au moins une conformation d'entraînement de la tête de la vis et d'autre part des moyens de préhension de la vis mobiles à l'intérieur de ladite cavité,
la tête (1) de vis étant conformée de manière à pouvoir s'engager dans ladite cavité, **caractérisée en ce que** le bord périphérique de la tête de vis est muni d'échancrures (6) destinées à coopérer avec les conformations dudit embout pour exercer sur la vis un couple de vissage et **en ce que** la vis comprend une portion sous-tête cylindrique (8) dont le diamètre est inférieur à celui de la tête (1) mais supérieur à celui de la tige filetée (7) de la vis, le raccord entre cette portion cylindrique (8) avec la périphérie (4) de la tête (1) et avec l'extrémité de la tige (7) s'effectuant grâce à des épaulements radiaux (R₁, R₂) dont les plans délimitent un espace dans lequel peuvent s'engager les moyens de préhension de l'embout lorsque ladite tête est engagée dans ladite cavité, le rayon de la portion cylindrique (8) étant égal à la distance entre le fond des échancrures (6) et l'axe (X, X') de la vis de manière à obtenir un centrage de la vis par l'action conjuguée de la douille (10) et des moyens de préhension.

2. Vis selon la revendication 1,
**caractérisée en ce que** les susdites conformations consistent en des dentelures réalisées sur le bord périphérique (4) de la tête (1) de la vis.

3. Vis selon la revendication 2,
**caractérisée en ce que** les dentelures délimitent les échancrures 6), lesquelles formant une angle d'environ 117°.

4. Vis selon l'une des revendications précédentes,
**caractérisée en ce que** la hauteur de la susdite portion cylindrique (8) est sensiblement égale à la hauteur de la tête (1).

5. Vis selon l'une des revendications précédentes,
**caractérisée en ce que** le diamètre de la tige (7) de la vis, au niveau de son raccordement à la portion cylindrique (8), est très inférieur à celui de la tête (1).

## Patentansprüche

1. Schraube, deren Kopf speziell dazu entworfen ist, um eine Verschraubung/ Abschraubung der Schraube mit Hilfe von Verschraubungsmitteln zu gestatten, die einerseits eine rohrförmige Hülse (10) umfassen, die dazu geeignet ist, in Drehung versetzt zu werden, und an einem ihrer Enden einen koaxialen Hohlraum aufweist, der sich nach außen hin öffnet, um den Schraubenkopf (1) aufnehmen zu können, wobei die innere Oberfläche der Hülse (10), die diesen Hohlraum abgrenzt, mindestens einen Schraubenkopfansatz bildet und andererseits in den Hohlraum bewegliche Greifmittel der Schraube umfasst, wobei der Schraubenkopf (1) so gestaltet ist, um sich in besagtem Hohlraum festzusetzen, **gekennzeichnet dadurch, dass** der periphere Rand des Schraubenkopfes mit bogenförmigen Ausschnitten (6) versehen ist, die dazu bestimmt sind, um mit den Formen der genannten Hülse (10) zusammenzuwirken, um auf die Schraube einen Schraubmoment auszuüben und **dadurch**, dass die Schraube eine Portion zylindrischen Unterkopf (8) umfasst, dessen Durchmesser kleiner als der des Kopfes (1) ist, jedoch größer als jener des Gewindestiftes (7) der Schraube ist, wobei die Verbindung zwischen dieser zylindrischen Portion (8) mit dem Umfang (4) des Kopfes (1) und mit dem Stiftende (7) mit radialen Ansätzen (R₁, R₂) erfolgt, wobei die Ebenen einen Raum abgrenzen, in dem sich die Greifmittel der Hülse (10) festsetzen können, wenn besagter Kopf in besagtem Hohlraum festgeschraubt wird, wobei der Radius der zylindrischen Portion (8) gleich der Entfernung zwischen dem Boden der bogenförmigen Ausschnitte (6) und der Schraubenachse (X, X') ist, um durch das Zusammenwirken der Hülse (10) und der Greifmittel eine Zentrierung der Schraube zu erhalten.

2. Schraube nach Anspruch 1, **gekennzeichnet dadurch, dass** die besagten Formen aus Längsnuten bestehen, die auf dem peripheren Rand (4) des Schraubenkopfes (1) hergestellt wurden.

3. Schraube nach Anspruch 2, **gekennzeichnet dadurch, dass** die Längsnuten die bogenförmigen Ausschnitte abgrenzen (6), die einen Winkel von etwa 117° bilden.

4. Schraube nach einem der vorangehenden Ansprüche, **gekennzeichnet dadurch, dass** die Höhe der besagten zylindrischen Portion (8) deutlich der Höhe des Kopfes (1) entspricht.

5. Schraube nach einem der vorangehenden Ansprüche, **gekennzeichnet dadurch, dass** der Durchmesser des Schraubenstiftes (7) auf der Höhe seiner Verbindung mit der zylindrischen Portion (8) viel geringer ist als jener des Kopfes (1).

## Claims

1. A screw, the head of which is specially designed to allow screwing/unscrewing of the screw by screwing means comprising a tubular socket (10) capable of being driven into rotation and having at one of its ends, a coaxial cavity opening onto the outside so as to be able to receive the head (1) of the screw, the inner surface of the socket (10) which delimits this cavity having at least one conformation for driving the head of the screw on the one hand and mobile means for gripping the screw inside said cavity on the other hand,
the screw head (1) being conformed so as to be able to engage into said cavity, **characterized in that** the peripheral rim of the screw end is provided with indented notches (6) in order to cooperate with the conformations of said socket (10) so as to exert a screwing torque on the screw, and **in that** the screw comprises a cylindrical sub-head portion (8), the diameter of which is less than that of the head (1) but larger than that of the threaded stem (7) of the screw, the connection between the cylindrical portion (8) with the periphery (4) of the head (1) and with the end of the stem (7) being accomplished by radial shoulders (R₁, R₂), the planes of which delimit a space in which means for gripping the socket (10) may be engaged when said head is engaged into said cavity, the radius of the cylindrical portion (8) being equal to the distance between the bottom of the notches (6) and the axis (X, X') of the screw so as to obtain centering of the screw by the combined action of the socket (10) and of the gripping means.

2. The screw according to claim 1,
**characterized in that** the aforesaid conformations consist in indentations made on the peripheral rim (4) of the head (1) of the screw.

3. The screw according to claim 2,
**characterized in that** the indentations delimit the notches (6) which form an angle of about 117°.

4. The screw according to any of the preceding claims,
**characterized in that** the height of the aforesaid cylindrical portion (8) is substantially equal to the height of the head (1).

5. The screw according to any of the preceding claims,
**characterized in that** the diameter of the stem (7) of the screw at its connection to the cylindrical portion (8), is much less than that of the head (1).
